# FASCICULE DE BREVET EUROPEEN

(11) **EP 2 843 196 B1**
(45) Date de publication et mention de la délivrance du brevet: **15.04.2020**
(21) Numéro de dépôt: 13182815.4
(22) Date de dépôt: 03.09.2013
(51) Int. Cl.: F01D 11/00, F16J 15/32

(54) **COMPRESSEUR DE TURBOMACHINE ET TURBOACHINE ASSOCIÉE**
VERDICHTER EINER TURBOMASCHINE UND ZUGEHÖRIGE TURBOMASCHINE
TURBOMACHINE COMPRESSOR AND CORRESPONDING TURBOMACHINE

(43) Date de publication de la demande: 04.03.2015
(73) Titulaire: Safran Aero Boosters SA, 4041 Herstal (BE)
(72) Inventeur: Naert, Arnaud, 4000 Liège (BE); Durieu, François, 5370 Havelange (BE)
(74) Mandataire: Lecomte & Partners

(56) Documents cités:
- EP-A1- 0 572 312
- DE-A1-102005 042 272
- DE-A1-102005 042 272
- GB-A- 2 002 460
- GB-A- 2 010 404
- US-A- 5 927 721
- US-A1- 2011 223 013
- US-B1- 6 170 831
- US-B2- 7 918 643

## Description

### Domaine technique

L'invention a trait au domaine de l'étanchéité tournante dans un compresseur de turbomachine axiale. Plus particulièrement, l'invention a trait à un joint à brosse de turbomachine axiale. Plus précisément, l'invention a trait à un joint à brosse entre une virole interne et un rotor de compresseur de turbomachine axiale. L'invention a également trait à une turbomachine axiale.

### Technique antérieure

Afin d'augmenter le rendement d'une turbomachine, il est nécessaire de réduire les fuites et les recirculations du fluide de travail. A cet effet, il est nécessaire de doter la turbomachine de joints annulaires entre son rotor et son stator. Une turbomachine peut comprendre plusieurs compresseurs, dont un compresseur basse pression. Afin d'assurer une étanché dans un tel compresseur, il est envisageable d'employer un joint à brosse annulaire.

Ce type de joint peut permettre d'assurer une étanchéité entre une virole interne du redresseur et le rotor du compresseur. Les joints à brosse comprennent une pluralité de poils qui peuvent être orientés axialement. La souplesse des poils est avantageuse puisqu'elle autorise des déplacements radiaux et axiaux du rotor par rapport au stator tout en préservant l'étanchéité, et sans dégrader le joint à brosse.

Il est connu du document DE 10 2005 042 272 A1 un compresseur de turbomachine d'aéronef comprenant un rotor et un stator. Ce dernier présente un redresseur muni d'une rangée annulaire d'aubes qui supportent une virole interne. Le rotor comporte deux rangées annulaires d'aubes disposées en amont et en aval de la virole interne. Le rotor présente deux plateformes annulaires d'où s'étendent radialement les aubes rotoriques. La turbomachine comprend des joints à brosse annulaires assurant des étanchéités entre la virole interne du redresseur et les plateformes des aubes. Ces joints sont disposés en amont et en aval de la virole interne et évitent la circulation d'un flux entre la virole interne et le rotor. Cependant, les différences de pressions tendent à plaquer le joint aval contre la plateforme du rotor, et à l'user rapidement.

De plus, la présence du joint aval impose de créer plusieurs marches sur la surface intérieure du fluide. Ces marches descendantes et montantes perturbent l'écoulement, ce qui nuit au rendement du compresseur. Cette configuration rajoute un écart axial entre la rangée d'aubes statoriques et la rangée d'aubes rotoriques disposée en aval.

### Résumé de l'invention

### Problème technique

L'invention a pour objectif de résoudre au moins un des problèmes techniques soulevés par l'art antérieur. Plus précisément, l'invention a pour objectif d'augmenter la durée de vie d'un joint à brosse disposé sur une virole interne. L'invention a également pour objectif d'améliorer la compacité d'un compresseur muni d'un joint à brosse dont les poils s'étendent axialement.

### Solution technique

L'invention est définie par les revendications adjointes.

L'invention a trait à un compresseur, de turbomachine axiale, comprenant : un stator comportant une rangée annulaire d'aubes statoriques s'étendant radialement, une virole annulaire interne disposée aux extrémités internes des aubes statoriques, un joint à brosse annulaire disposé sur la virole interne; un rotor comportant une surface annulaire d'étanchéité disposée du côté aval de la rangée d'aubes statoriques et qui coopère avec le joint à brosse de sorte à assurer une étanchéité entre la virole interne et le rotor, remarquable en ce que la surface annulaire entoure le joint à brosse.

Selon un mode avantageux de l'invention, le joint à brosse comprend des poils s'étendant généralement axialement, et qui sont généralement tangents à ou alignés avec la surface annulaire, préférentiellement les poils épousent généralement l'enveloppe interne du flux traversant le compresseur. Certains poils peuvent être généralement tangents à ou généralement alignés avec la surface annulaire puisque cette dernière peut présenter un profil de révolution droit ou courbe.

Selon un mode avantageux de l'invention, la surface annulaire est généralement cylindrique, ou généralement tronconique, ou la surface annulaire présente un profil de révolution courbe qui épouse la surface extérieure du joint à brosse.

Selon un mode avantageux de l'invention, le joint à brosse est disposé axialement au niveau du bord aval de la virole interne, préférentiellement le joint à brosse s'étend axialement depuis le bord de la virole interne.

Selon un mode avantageux de l'invention, le joint à brosse est intégré radialement dans l'épaisseur de la virole interne, préférentiellement l'épaisseur radiale du profil de révolution du joint à brosse est inférieure à l'épaisseur radiale moyenne de la virole interne.

Selon un mode avantageux de l'invention, le rotor comprend une rangée annulaire d'aubes rotoriques disposée en aval des aubes statoriques et une plateforme annulaire disposée radialement à l'extrémité interne des aubes rotoriques, la plateforme annulaire comprend une portée tubulaire dont la surface interne forme la surface annulaire.

Selon un mode avantageux de l'invention, la surface annulaire est disposée axialement à distance des aubes statoriques, préférentiellement les aubes rotoriques chevauchent axialement au moins partiellement le joint à brosse.

Selon un mode avantageux de l'invention, le rotor comprend au moins une gorge annulaire radiale de rétention radiale des aubes rotoriques qui est ouverte radialement vers l'extérieur, les aubes rotoriques comprennent des pieds de rétention insérés dans la gorge radiale de sorte à assurer une rétention radiale des aubes rotoriques, la surface annulaire est disposée radialement à distance de la gorge radiale.

Selon un mode avantageux de l'invention, les aubes rotoriques comprennent des butées s'étendant radialement en regard du joint à brosse.

Selon un mode avantageux de l'invention, le rotor comprend une gorge annulaire axiale ouverte axialement qui forme la surface annulaire et dans laquelle le joint à brosse s'étend axialement.

Selon un mode avantageux de l'invention, le joint à brosse s'étend dans la majorité axiale de la gorge axiale et/ou le joint à brosse occupe radialement la majorité de la gorge axiale.

Selon un mode avantageux de l'invention, le joint à brosse comprend une partie amont insérée dans la virole interne, et une partie libre en aval qui fait saillie par rapport à la virole interne, la majorité de la partie libre du joint à brosse s'étendant dans la gorge axiale.

Selon un mode avantageux de l'invention, le stator comprend deux joints à brosse disposés en amont et en aval de la virole interne, ladite virole interne comprenant une portion annulaire supportant les deux joints à brosse, préférentiellement ladite portion est venue de matière.

Selon un mode avantageux de l'invention, la virole interne comprend un matériau composite, préférentiellement le matériau composite forme la majorité volumique de la virole interne.

Selon un mode avantageux de l'invention, le rotor comprend un tambour avec un profil de révolution, la majorité de la virole interne épousant la surface extérieure du tambour, et/ou la majorité du profil de révolution de la surface intérieure de la virole interne est sensiblement parallèle à la surface extérieure du tambour.

Selon un mode avantageux de l'invention, le profil de révolution de la surface annulaire est incliné de plus de 1°, préférentiellement incliné de plus de 10° par rapport à l'axe de rotation du compresseur.

Selon un mode avantageux de l'invention, la surface annulaire est disposée axialement à l'intérieur des aubes rotoriques.

Selon un mode avantageux de l'invention, les poils s'étendent généralement axialement,

L'invention a également trait à une turbomachine axiale comprenant un compresseur, notamment un compresseur basse pression, remarquable en ce que le compresseur est conforme à l'invention.

### Avantages apportés

L'invention permet d'éviter que la différence de pression entre l'aval et l'amont du redresseur ne plaque le joint à brosse contre la surface annulaire du rotor. Ainsi, le joint à brosse sera moins soumis à usure pendant le fonctionnement du compresseur. Par ce biais, le joint à brosse est préservé et sa durée de vie est allongée.

La forme de la gorge axiale dans laquelle le joint à brosse est disposé permet de former un obstacle à la circulation d'une éventuelle fuite. Cette forme comporte des chicanes qui ralentissent une éventuelle fuite et améliore le rendement du compresseur.

Le joint à brosse permet en outre d'augmenter la compacité compresseur. L'épaisseur de la virole interne peut être réduite. De même, la profondeur de la gorge radiale accueillant la virole interne peut être diminuée, ce qui contribue à alléger le rotor. La proximité radiale entre la plateforme des aubes rotoriques et les jonctions entre les plateformes annulaires favorise la robustesse du rotor, et permet d'en réduire les épaisseurs.

### Brève description des dessins

La figure 1 représente une turbomachine axiale selon l'invention.
La figure 2 est un schéma d'un compresseur de turbomachine selon un premier mode de réalisation de l'invention.
La figure 3 illustre une portion du compresseur selon le premier mode de réalisation de l'invention.
La figure 4 esquisse un compresseur de turbomachine selon un deuxième mode de réalisation de l'invention.

### Description des modes de réalisation

Dans la description qui va suivre, les termes intérieur ou interne et extérieur ou externe renvoient à un positionnement par rapport à l'axe de rotation d'une turbomachine axiale.

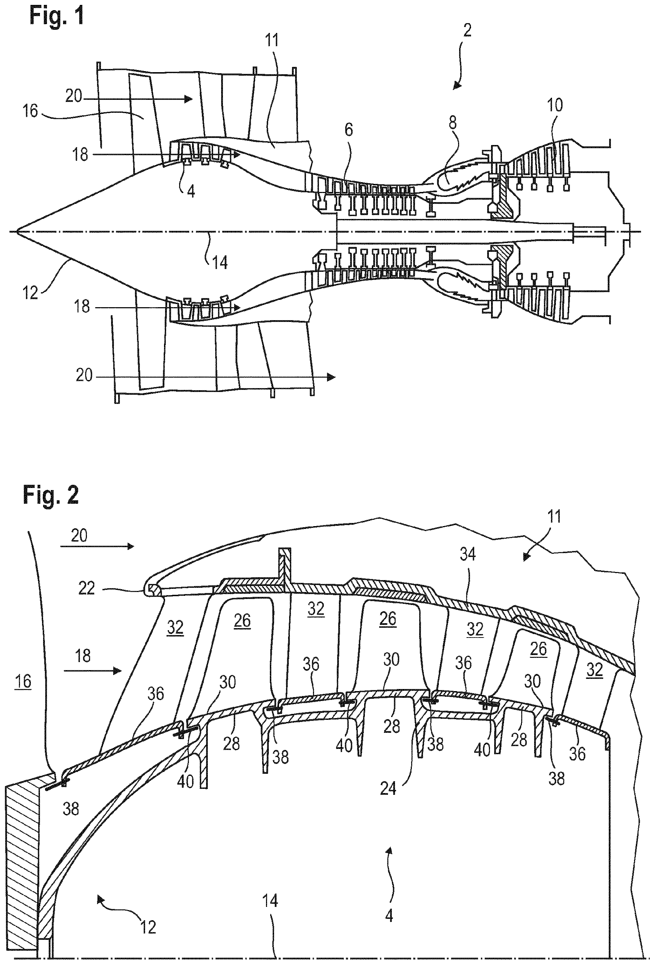

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. Au moins un des compresseurs comprend un stator et un rotor 12. Les rotors peuvent être couplés.

En fonctionnement, la puissance mécanique de la turbine 10 transmise via l'arbre central jusqu'au rotor 12 met en mouvement les deux compresseurs 4 et 6. Des moyens de démultiplication peuvent augmenter la vitesse de rotation transmise aux compresseurs. Ou encore, les différents étages de turbines peuvent chacun être reliés aux étages de compresseur via des arbres concentriques. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Les flux primaire 18 et secondaire 20 sont des flux annulaires, ils sont canalisés par le carter de la turbomachine. A cet effet, le carter présente des parois cylindriques ou viroles qui peuvent être internes et externes.

La figure 2 est une vue en coupe d'un compresseur d'une turbomachine axiale 2 telle que celle de la figure 1. Le compresseur peut être un compresseur basse-pression 4. On peut y observer une partie du fan 16 et le bec de séparation 22 du flux primaire 18 et du flux secondaire 20.

Le rotor 12 peut comprendre un tambour 24 essentiellement creux. Il montre, généralement, une forme de révolution avec un profil de révolution autour de l'axe 14. Le tambour 24 peut être monobloc, éventuellement venu de matière. Il peut être réalisé en un métal tel du titane. Le tambour 24 peut s'étendre axialement sur la majorité du compresseur 4. Le profil de révolution du tambour 24 peut-être courbe. Selon le sens d'écoulement, il peut former une augmentation de rayon puis une diminution de rayon.

Le rotor 12 comprend au moins une, préférentiellement plusieurs rangées d'aubes rotoriques 26, en l'occurrence trois. Le rotor 12 peut comprendre au moins une, préférentiellement plusieurs plateformes annulaires 28 qui sont chacune associée à une rangée d'aubes rotoriques 26. Les plateformes annulaires 28 peuvent être des supports de fixation d'où s'étendent radialement les aubes rotoriques 26. Les plateformes annulaires 28 comprennent des surfaces extérieures 30 guidant le flux annulaire primaire 18. Les aubes rotoriques 26 peuvent être soudées sur le tambour 24 de sorte à former un ensemble monobloc.

Le stator 11 comprend au moins un redresseur, préférentiellement plusieurs redresseurs, en l'occurrence quatre, qui contiennent chacun une rangée d'aubes statoriques 32. Les redresseurs sont associés au fan 16 ou à une rangée d'aubes rotoriques 26 pour redresser le flux d'air, de sorte à convertir la vitesse du flux en pression.

Les aubes statoriques 32 s'étendent essentiellement radialement depuis un carter extérieur 34 du stator 11. Le carter extérieur 34 peut être réalisé en un matériau composite. Les aubes statoriques 32 peuvent être soudées sur le carter extérieur 34, ou fixées à l'aide d'un axe. Les aubes statoriques 32 sont régulièrement espacées les unes des autres, et présentent une même orientation angulaire dans le flux. Avantageusement, les aubes d'une même rangée sont identiques. Eventuellement, l'espacement entre les aubes peut varier localement, tout comme leur orientation angulaire. Certaines aubes peuvent être différentes du reste des aubes de leur rangée.

Le stator 11 comprend au moins une virole interne 36 associée à une rangée annulaire d'aubes statoriques, préférentiellement plusieurs viroles internes 36, chacune associée à une rangée annulaire d'aubes statoriques. Les viroles internes 36 présentent généralement une forme de révolution avec un profil de révolution autour de l'axe 14. Chaque profil de révolution peut présenter une forme de « U » ouvert vers l'intérieur. La majorité axiale du profil de révolution d'au moins une virole interne 36 est sensiblement parallèle à la surface extérieure du tambour, ce qui permet d'améliorer la compacité.

Les viroles internes 36 peuvent comprendre un matériau composite. Au moins une, préférentiellement chaque virole interne 36 comprend au moins 10%, préférentiellement au moins 80% volumique de matériau composite. Les viroles internes 36 peuvent être réalisées par injection d'une résine dans un moule. La résine peut être une résine chargée de fibres, et/ou le moule peut comprendre une préforme.

Une virole interne peut comprendre du métal, par exemple du titane. Elle peut être réalisée par usinage, par forgeage, par cintrage.

Le stator 11 comprend au moins, préférentiellement plusieurs joints à brosse (38 ; 40) annulaires qui coopèrent avec le rotor de sorte à assurer une étanchéité entre l'amont et l'aval du redresseur associé. Au moins un ou chaque joint à brosse (38 ; 40) peut être configuré pour éviter une recirculation de fluide d'aval vers l'amont qui passe entre une virole interne 36 et le tambour 24. Le stator peut comprendre des joints à brosse (38 ; 40) qui sont disposés en amont et en aval de chaque virole interne 36, et qui coopèrent avec le rotor 12 de sorte à assurer une étanchéité. Au moins une virole interne 36 comprend une portion annulaire qui supporte un joint à brosse amont 38 et un joint à brosse aval 40. Ladite portion est avantageusement liée aux aubes statoriques 26, et est éventuellement venue de matière. La portion peut être réalisée en matériaux composites.

Au moins un, préférentiellement chaque joint à brosse (38 ; 40) est inséré dans l'épaisseur de la virole interne 36 associée en vue de sa fixation. Eventuellement, l'épaisseur radiale du profil de révolution d'un, préférentiellement de chaque joint à brosse est inférieure à l'épaisseur radiale moyenne du profil de révolution de la virole interne associée. Les joints à brosse (38 ; 40) peuvent être intégrés dans l'épaisseur de brides radiales annulaires des viroles internes.

Suivant une alternative de l'invention, le rotor comprend des joints à brosse, par exemple disposés sur les plateformes annulaires du rotor, et qui coopèrent avec le stator, éventuellement avec les viroles internes, de sorte à assurer une étanchéité entre chaque redresseur et le rotor.

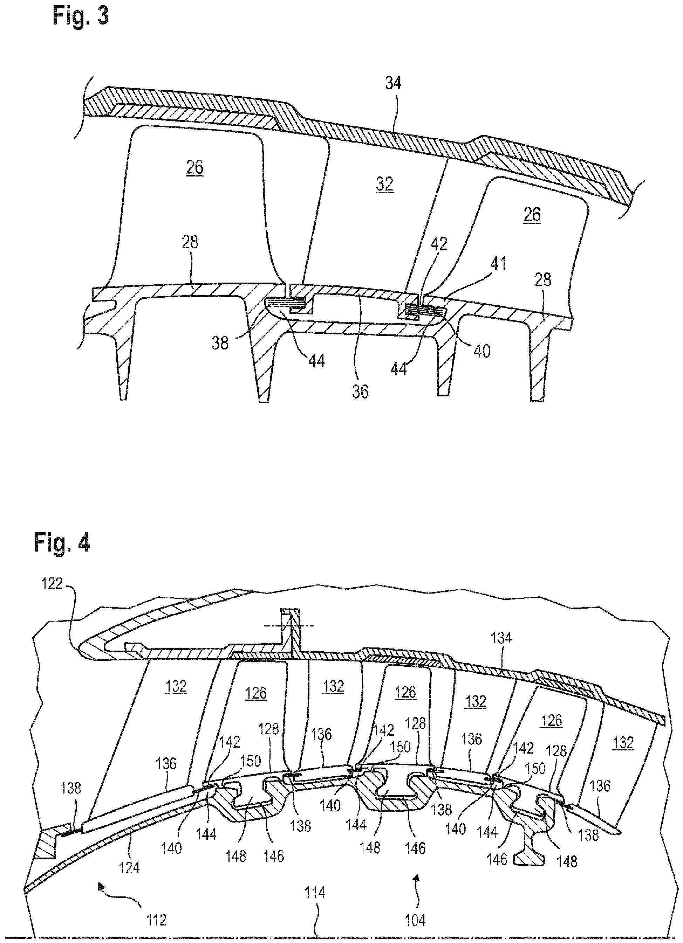

La figure 3 esquisse une portion de compresseur selon le premier mode de réalisation de l'invention.

Au moins un, préférentiellement chaque joint à brosse (38 ; 40) comprend une partie insérée dans la virole interne, et une partie libre. La partie insérée peut être une partie amont, la partie libre peut être une partie aval. Chaque partie libre fait saillie, principalement axialement, par rapport à la virole interne. Chaque partie insérée de joint à brosse est fixée à la virole interne 36 correspondante.

Au moins un, préférentiellement chaque joint à brosse (38 ; 40) comprend des poils qui peuvent s'étendre principalement axialement. Les poils sont disposés au niveau des bords amont et aval de la virole interne 36. Les poils sont essentiellement souples et présentent une raideur. Ils sont aptes à se déformer élastiquement lors du montage du compresseur. Les poils peuvent être réalisés en polymère et présenter une diamètre inférieur à 2,00 mm, préférentiellement inférieur à 0,10 mm.

La plateforme annulaire comprend une portée tubulaire 41 dont la surface intérieure forme une surface annulaire d'étanchéité 42 qui coopère avec un joint à brosse aval 40 de sorte à assurer une étanchéité. La surface annulaire 42 entoure un joint à brosse aval 40 associé. Préférentiellement, le rotor comprend des surfaces annulaires 42 qui sont associées à chaque joint à brosse. Avantageusement, les surfaces annulaires 42 sont généralement cylindriques, et éventuellement sensiblement coniques ou tronconiques. Chaque surface annulaire 42 peut être sensiblement tangente à la surface extérieure du joint à brosse associée. Eventuellement, certains poils peuvent être alignés à la surface annulaire. Si la surface Chaque surface extérieure de joint à brosse et/ou chaque surface annulaire peut généralement épouser l'enveloppe interne du flux annulaire traversant le compresseur.

Le rotor peut comprendre au moins une, préférentiellement plusieurs gorges annulaires axiales 44 ouvertes axialement, par exemple vers une virole interne 36 disposée en regard. Chaque gorge axiale 44 forme une des surfaces annulaires 42, éventuellement interne, avec laquelle coopère un joint à brosse aval 40. Chaque joint à brosse aval 40 peut être associé à une gorge axiale 44, et réciproquement.

Au moins un, préférentiellement chaque joint à brosse aval 40 peut s'étendre dans la majorité axiale de la gorge axiale 44 associée, éventuellement au moins un des joints à brosse aval 40 s'étend axialement dans la totalité de gorge axiale 44 associée. Au moins un, préférentiellement chaque profil de révolution de joint à brosse aval 40 peut occuper radialement la majorité du profil de révolution de la gorge axiale associée. L'épaisseur du profil de révolution d'au moins un, préférentiellement de chaque joint à brosse aval 40 peut être supérieure à la majorité de la hauteur radiale du profil de révolution de la gorge axiale associée.

Le joint à brosse aval 40 peut être configuré de sorte à ce que lorsque le compresseur est à l'arrêt, il exerce une pression P1 contre la surface annulaire 42 associée, et lorsque le compresseur tourne à un régime prédéfini ou régime nominal, le joint à brosse aval 40 exerce contre la surface annulaire 42 une pression P2 qui est inférieure à la pression P1. La différence de pression entre P1 et P2 résulte de l'augmentation de pression en aval des aubes statoriques 32 lors du fonctionnement du compresseur. Le régime donné peut être supérieur à 2000 tours/minute, préférentiellement supérieur à 4000 tours/minute, plus préférentiellement supérieur à 8000 tours/minute, éventuellement supérieur à 15000 tours/minute. La pression P2 peut devenir nulle lorsque le régime du compresseur atteint son régime nominal. Les poils du joint à brosse aval 40 peuvent être précontraints et exercer un effort contre la surface annulaire lorsqu'ils sont montés dans le compresseur, ce dernier étant à l'arrêt. En fonctionnement, la différence de pression a pour effet de repousser les poils, ceux disposés à l'extérieur effleurent la surface annulaire 42.

La figure 4 ébauche un compresseur 104 selon un deuxième mode de réalisation de l'invention. Cette figure 4 reprend la numérotation des figures précédentes pour les éléments identiques ou similaires, la numération étant toutefois incrémentée de 100. Des numéros spécifiques sont utilisés pour les éléments spécifiques à ce mode de réalisation.

Le rotor 112 peut comprendre un tambour 124 monobloc avec au moins une, préférentiellement plusieurs gorges radiales 146 annulaires ouvertes radialement vers l'extérieur. Chaque gorge radiale 146 peut être associée à une rangée annulaire d'aubes rotoriques 126. Les gorges radiales 146 comprennent des parois inclinées, qui peuvent s'évaser vers l'extérieur.

Les aubes rotoriques 126 peuvent comprendre des plateformes 128 et des pieds de rétention 148, par exemple en forme de queue d'aronde, insérés dans les gorges radiales 146. Les gorges et les pieds peuvent être configurés de sorte à permettre une rétention radiale vers l'intérieur des aubes rotoriques 126. Les pieds de rétention s'étendent radialement depuis leurs plateformes 128 associées, vers le fond de la gorge radiale 146 d'accueil. La réunion des plateformes des aubes peut former une surface annulaire 142 qui coopère avec un joint à brosse (138 ; 140). Chaque profil de révolution de joint à brosse est à distance radialement de la gorge annulaire la plus proche.

Les gorges axiales 144 sont délimitées par les plateformes 128 et le tambour 124. Les aubes rotoriques 126 peuvent comprendre des butées 150 configurées pour limiter, éventuellement empêcher, leur basculement amont aval. Les butées 150 s'étendent radialement depuis leur plateforme 128 associée, et coopèrent avec le tambour 124, par exemple de part et d'autre des gorges 146, axialement et/ou radialement. Les butées 150 peuvent s'étendre radialement au niveau des joints à brosse. Au moins une butée peut s'étendre radialement sur la majorité de la gorge axiale 144 associée.

Au moins une des, préférentiellement chaque virole interne 136 peut généralement présenter une épaisseur constante, dans laquelle sont intégrés les joints à brosse (138 ; 140). La surface interne de chaque virole interne 136 peut épouser la surface externe du tambour 124.

Il est à noter que les caractéristiques techniques spécifiques à chacun des deux modes de réalisation peuvent être appliquées à l'autre mode réalisation ou toute autre mode de réalisation conforme aux revendications.

## Revendications

1. Compresseur (4 ; 6 ; 104) de turbomachine (2) axiale, comprenant :
- un stator (11) comportant:
∘ une rangée annulaire d'aubes statoriques (32 ; 132) s'étendant radialement,
∘ une virole annulaire interne (36 ; 136) disposée aux extrémités internes des aubes statoriques,
∘ un joint à brosse (40 ; 140) annulaire disposé sur la virole interne (36 ; 136) et comprenant des poils s'étendant généralement axialement, et qui sont généralement tangents à ou alignés avec une surface annulaire (42 ; 142),
- un rotor (12) comportant un tambour (24 ; 124) et une rangée annulaire d'aubes rotoriques (26 ; 126) disposée en aval des aubes statoriques (32 ; 132) et une plateforme annulaire (28 ; 128) disposée radialement à l'extrémité interne des aubes rotoriques (26 ; 126), la plateforme annulaire (28 ; 128) comprenant une portée tubulaire (41) dont la surface interne forme ladite surface annulaire d'étanchéité (42 ; 142) qui coopère avec le joint à brosse (40 ; 140) et l'entoure de sorte à assurer une étanchéité entre la virole interne (36 ; 136) et le rotor (12), tel que la surface annulaire (42 ; 142) est disposée axialement à distance des aubes statoriques (32 ; 132) ;
et que les aubes rotoriques (26 ; 126) chevauchent axialement au moins partiellement le joint à brosse ;
**caractérisé en ce que** le rotor comprend au moins une gorge annulaire radiale (146) de rétention radiale des aubes rotoriques (126) qui est ouverte radialement vers l'extérieur, les aubes rotoriques (126) comprenant des pieds de rétention (148) insérés dans la gorge radiale (146) de sorte à assurer une rétention radiale des aubes rotoriques, la surface annulaire (142) étant disposée radialement à distance de la gorge radiale (146) ;
et **en ce que** les aubes rotoriques comprennent des butées (150) à distance axiale des pieds de rétention (148), les butées (150) s'étendant radialement depuis la plateforme annulaire (128) pour coopérer avec le tambour (24 ; 124), les butées (150) s'étendant radialement en regard du joint à brosse.

2. Compresseur (4 ; 6 ; 104) selon la revendication 1, **caractérisé en ce que** les poils épousent généralement l'enveloppe interne du flux traversant le compresseur.

3. Compresseur (4 ; 6 ; 104) selon l'une des revendications 1 à 2, **caractérisé en ce que** la surface annulaire (42 ; 142) est généralement cylindrique, ou généralement tronconique, ou la surface annulaire présente un profil de révolution courbe qui épouse la surface extérieure du joint à brosse (40 ; 140).

4. Compresseur (4 ; 6 ; 104) selon l'une des revendications 1 à 3, **caractérisé en ce que** le joint à brosse (40 ; 140) est disposé axialement au niveau du bord aval de la virole interne (36 ; 136), préférentiellement le joint à brosse (40 ; 140) s'étend axialement depuis le bord de la virole interne.

5. Compresseur (4 ; 6 ; 104) selon l'une des revendications 1 à 4, **caractérisé en ce que** le joint à brosse (40 ; 140) est intégré radialement dans l'épaisseur de la virole interne (36 ; 136), préférentiellement l'épaisseur radiale du profil de révolution du joint à brosse (40 ; 140) est inférieure à l'épaisseur radiale moyenne de la virole interne.

6. Compresseur (4 ; 6 ; 104) selon l'une des revendications 1 à 5, **caractérisé en ce que** le rotor (12) comprend une gorge annulaire axiale (44, 144) ouverte axialement qui forme la surface annulaire (42 ; 142) et dans laquelle le joint à brosse (40 ; 140) s'étend axialement.

7. Compresseur (4 ; 6 ; 104) selon la revendication 6, **caractérisé en ce que** le joint à brosse (40 ; 140) s'étend dans la majorité axiale de la gorge axiale (44, 144) et/ou le joint à brosse occupe radialement la majorité de la gorge axiale.

8. Compresseur (4 ; 6 ; 104) selon l'une des revendications 6 à 7, **caractérisé en ce que** le joint à brosse (40 ; 140) comprend une partie amont insérée dans la virole interne (36 ; 136), et une partie libre en aval qui fait saillie par rapport à la virole interne, la majorité de la partie libre du joint à brosse s'étendant dans la gorge axiale (44, 144).

9. Compresseur (4 ; 6 ; 104) selon l'une des revendications 1 à 8, **caractérisé en ce que** le stator (11) comprend deux joints à brosse (38 ; 40 ; 138 ; 140) disposés en amont et en aval de la virole interne (36 ; 136), ladite virole interne comprenant une portion annulaire supportant les deux joints à brosse, préférentiellement ladite portion est venue de matière.

10. Compresseur (4 ; 6 ; 104) selon l'une des revendications 1 à 9, **caractérisé en ce que** la virole interne (36 ; 136) comprend un matériau composite, préférentiellement le matériau composite forme la majorité volumique de la virole interne (36 ; 136).

11. Turbomachine (2) axiale comprenant un compresseur, notamment un compresseur basse pression (4 ; 104), **caractérisée en ce que** le compresseur (4 ; 6 ; 104) est conforme à l'une des revendications 1 à 10.

## Patentansprüche

1. Kompressor (4; 6; 104) für eine axiale Turbomaschine (2), umfassend:
- einen Stator (11), der das Folgende beinhaltet:
∘ eine ringförmige Anordnung von sich radial erstreckenden Statorschaufeln (32; 132),
∘ eine innere ringförmige Hülse (36; 136), die an den inneren Enden der Statormesser angeordnet ist,
∘ eine ringförmige Bürstendichtung (40; 140), die auf der inneren Hülse (36; 136) angeordnet ist und im Allgemeinen axial verlaufende Borsten umfasst, die im Allgemeinen tangential zu oder ausgerichtet zu einer ringförmigen Oberfläche (42; 142) sind,
- einen Rotor (12) mit einer Trommel (24; 124) und einer ringförmigen Reihe von Rotorschaufeln (26; 126), die stromabwärts der Statormesser (32; 132) angeordnet sind, und einer ringförmigen Plattform (28; 128), die radial am inneren Ende der Rotorschaufeln (26; 126) angeordnet ist, wobei die ringförmige Plattform (28; 128) ein rohrförmiges Lager (41) umfasst, dessen Innenfläche die
ringförmige Dichtfläche (42; 142) bildet, die mit der
Bürstendichtung (40; 140) zusammenwirkt und sie so umschließt, dass eine Abdichtung zwischen der inneren Hülse (36; 136) und dem Rotor (12) sicherstellt ist, so dass
die ringförmige Oberfläche (42; 142) axial in einem Abstand zu den Statormessern (32; 132) angeordnet ist;
und dass sich die Rotorblätter (26; 126) zumindest teilweise axial mit der Bürstendichtung überlappen, **dadurch gekennzeichnet, dass** der Rotor mindestens eine ringförmige radiale Rückhaltenut (146) der Rotorschaufeln (126) aufweist, die radial nach außen offen ist, wobei die Rotorschaufeln (126) Rückhaltefüße (148) aufweisen, die in die radiale (146) eingesetzt sind, um eine radiale Rückhaltung der Rotorblätter zu gewährleisten, wobei die ringförmige Oberfläche (142) radial von der radialen Nut (146) beabstandet ist und
wobei die Rotorschaufeln Anschläge (150) im axialen Abstand zu den Haltefüßen (148) aufweisen und die Anschläge (150) sich radial von der ringförmigen Plattform (128) erstrecken, um mit der Trommel (24; 124) zusammenzuwirken, wobei sich die Anschläge (150) radial gegenüber der Bürstendichtung erstrecken.

2. Kompressor (4; 6; 104) nach Anspruch 1, **dadurch gekennzeichnet, dass** die Borsten im Allgemeinen der inneren Hülle des Stromes durch den Kompressor folgen.

3. Kompressor (4; 6; 104) nach einem der Ansprüche 1 bis 2, **dadurch gekennzeichnet, dass** die ringförmige Oberfläche (42; 142) im Allgemeinen zylindrisch oder im Allgemeinen kegelstumpfförmig ist oder die ringförmige Oberfläche ein gekrümmtes Drehprofil aufweist, das der Außenfläche der Bürstendichtung (40; 140) folgt.

4. Kompressor (4; 6; 104) nach einem der Ansprüche 1 bis 3, **dadurch gekennzeichnet, dass** die Bürstendichtung (40; 140) axial am stromabwärtigen Rand der inneren Hülse (36; 136) angeordnet ist, vorzugsweise erstreckt sich die Bürstendichtung (40; 140) axial vom Rand der Innenschale.

5. Kompressor (4; 6; 104) nach einem der Ansprüche 1 bis 4, **dadurch gekennzeichnet, dass** die Bürstendichtung (40; 140) radial in die Dicke der inneren Hülse (36; 136) integriert ist, vorzugsweise ist die radiale Dicke des Drehprofils der Bürstendichtung (40; 140) kleiner als die durchschnittliche radiale Dicke der inneren Hülse.

6. Kompressor (4; 6; 104) nach einem der Ansprüche 1 bis 5, **dadurch gekennzeichnet, dass** der Rotor (12) eine axial offene axiale Ringnut (44, 144) aufweist, die die Ringfläche (42; 142) bildet und sich in der sich die Bürstendichtung (40; 140) axial erstreckt.

7. Kompressor (4; 6; 104) nach Anspruch 6, **dadurch gekennzeichnet, dass** sich die Bürstendichtung (40; 140) in den axial größten Teil der axialen Nut (44, 144) erstreckt und/oder die Bürstendichtung radial den größten Teil der Hauptmasse der axialen Nut einnimmt.

8. Kompressor (4; 6; 104) nach einem der Ansprüche 6 bis 7, **dadurch gekennzeichnet, dass** die Bürstendichtung (40; 140) einen in die innere Hülse (36; 136) eingesetzten stromaufwärts gerichteten Abschnitt und einen von der inneren Hülse vorstehenden stromabwärts gerichteten freien Abschnitt umfasst, wobei sich der größte Teil des freien Abschnitts der Bürstendichtung in die axiale Nut (44, 144) erstreckt.

9. Kompressor (4; 6; 104) nach einem der Ansprüche 1 bis 8, **dadurch gekennzeichnet, dass** der Stator (11) zwei Bürstendichtungen (38; 40; 138; 140) umfasst, die stromaufwärts und stromabwärts der inneren Hülle (36; 136) angeordnet sind, wobei die innere Hülle einen ringförmigen Abschnitt umfasst, der die beiden Bürstendichtungen trägt und vorzugsweise der Abschnitt aus dem gleichen Material besteht.

10. Kompressor (4; 6; 104) nach einem der Ansprüche 1 bis 9, **dadurch gekennzeichnet, dass** die innere Hülse (36; 136) ein Verbundmaterial umfasst, vorzugsweise das Verbundmaterial, das die Volumenmehrheit der inneren Hülse (36; 136) bildet.

11. Axiale Turbomaschine (2) mit einem Kompressor, insbesondere einem Niederdruckkompressor (4; 104), **dadurch gekennzeichnet, dass** der Kompressor (4; 6; 104) einem der Ansprüche 1 bis 10 entspricht.

## Claims

1. Compressor (4; 6; 104) of an axial turbomachine (2), comprising:
- a stator (11) having:
∘ an annular row of stator blades (32; 132) extending radially,
∘ an inner annular ferrule (36; 136) disposed at the inner ends of the stator blades,
∘ an annular brush seal (40; 140) disposed on the inner ferrule (36; 136) and comprising bristles extending generally axially, and which are generally tangential to or aligned with an annular surface (42; 142),
- a rotor (12) having a drum (24; 124) and an annular row of rotor blades (26; 126) disposed downstream of the stator blades (32; 132) and an annular platform (28; 128) disposed radially at the inner end of the rotor blades (26; 126), the annular platform (28; 128) comprising a tubular sleeve (41) whose inner surface forms said
annular sealing surface (42; 142) which cooperates with the brush seal (40; 140) and surrounds it so as to ensure a seal between the inner ferrule (36; 136) and the rotor (12), such that
the annular surface (42; 142) is disposed axially away from the stator blades (32; 132);
and that the rotor blades (26; 126) at least partially axially overlap the brush seal; **characterised**
**in that** the rotor comprises at least one radial annular groove of radial retention (146) of the rotor blades (126) which is open radially outwardly, the rotor blades (126) comprising retention feet (148) inserted in the radial groove (146) so as to ensure radial retention of the rotor blades, the annular surface (142) being disposed radially away from the radial groove (146);
and **in that** the rotor blades comprise stops (150) at axial distance from the retention feet (148), the stops (150) extending radially
from the annular platform (128) to cooperate with the drum (24; 124), the stops (150) extending radially opposite the brush seal.

2. The compressor (4; 6; 104) according to claim 1, **characterised in that** the bristles generally fit closely with the inner envelope of the flow through the compressor.

3. The compressor (4; 6; 104) according to any of claims 1 to 2, **characterised in that** the annular surface (42; 142) is generally cylindrical, or generally frustoconical, or the annular surface has a curved profile of revolution which fits closely with the outer surface of the brush seal (40; 140).

4. The compressor (4; 6; 104) according to any of claims 1 to 3, **characterised in that** the brush seal (40; 140) is disposed axially at the downstream edge of the inner ferrule (36; 136), preferably the brush seal (40; 140) extends axially from the edge of the inner ferrule.

5. The compressor (4; 6; 104) according to any of claims 1 to 4, **characterised in that** the brush seal (40; 140) is radially integrated in the thickness of the inner ferrule (36; 136), preferably the radial thickness of the profile of revolution of the brush seal (40; 140) is less than the average radial thickness of the inner ferrule.

6. The compressor (4; 6; 104) according to any of claims 1 to 5, **characterised in that** the rotor (12) comprises an axial annular groove (44, 144) that opens axially and which forms the annular surface (42; 142) and in which the brush seal (40; 140) extends axially.

7. The compressor (4; 6; 104) according to claim 6, **characterised in that** the brush seal (40; 140) extends in the axial majority of the axial groove (44, 144) and/or the brush seal radially occupies the majority of the axial groove.

8. The compressor (4; 6; 104) according to any of claims 6 to 7, **characterised in that** the brush seal (40; 140) comprises an upstream portion inserted in the inner ferrule (36; 136), and a free downstream portion projecting relative to the inner ferrule, the majority of the free portion of the brush seal extending in the axial groove (44, 144).

9. The compressor (4; 6; 104) according to any of claims 1 to 8, **characterised in that** the stator (11) comprises two brush seals (38; 40; 138; 140) disposed upstream and downstream of the inner ferrule (36; 136), said inner ferrule comprising an annular portion supporting the two brush seals, preferably said portion being formed integrally.

10. The compressor (4; 6; 104) according to any of claims 1 to 9, **characterised in that** the inner ferrule (36; 136) comprises a composite material, preferably the composite material forms the volume majority of the inner ferrule (36; 136).

11. An axial turbomachine (2) comprising a compressor, in particular a low-pressure compressor (4; 104), **characterised in that** the compressor (4; 6; 104) complies with any one of claims 1 to 10.
